# EUROPEAN PATENT APPLICATION

(11) **EP 4 625 630 A2**
(43) Date of publication of application: **01.10.2025**
(21) Application number: 25196112.4
(22) Date of filing: 19.11.2021
(51) Int. Cl.: H01M 50/133

(54) **METHOD FOR MANUFACTURING POUCH CASE OF SECONDARY BATTERY, AND POUCH FILM OF SECONDARY BATTERY AND POUCH CASE OF SECONDARY BATTERY**

(30) Priority: 23.11.2020 KR 20200158223; 26.10.2021 KR 20210143257
(62) Divisional of application: 21895164.8
(71) Applicant: LG Energy Solution, Ltd., Seoul 07335 (KR)
(72) Inventor: KIM, Kyoung Ha, 34122 DAEJEON (KR); CHOI, Yang Lim, 34122 DAEJEON (KR)
(74) Representative: Plasseraud IP

(57) **Abstract**

The present invention relates to a pouch film of a secondary battery, the pouch film comprising: an inner layer; a metal layer stacked above the inner layer; and an outer layer which is stacked above the metal layer and in which colored dye particles are mixed. When forming of the pouch film, the concentration of the dye particles in a section B, in which the elongation occurs, becomes lower than that in a section A in which the elongation does not occur, as a result, the color concentration of the outer layer in the section B, in which the elongation occurs, becomes lighter and is mixed with the color of the metal layer stacked below the outer layer, thus, the color of the outer layer in the elongation occurrence section B changes.

The present invention relates also to a pouch case of a secondary battery.

## Description

### CROSS-REFERENCE TO RELATED APPLICATION

The present application claims the benefit of the priority of Korean Patent Application Nos. 10-2020-0158223, filed on November 23, 2020, and 10-2021-0143257, filed on October 26, 2021, which are hereby incorporated by reference in their entirety.

### TECHNICAL FIELD

The present invention relates to a method for manufacturing a pouch case of a secondary battery, and a pouch film of a secondary battery and a pouch case of a secondary battery. During a process of manufacturing a pouch by forming a pouch film, an elongation rate can be measured by the color of an outer layer of the pouch film without separate sampling, and it can be determined whether or not elongation has occurred which causes a critical level in which a crack is about to occur or a defective level in which a crack is occurring.

### BACKGROUND ART

Secondary batteries that are repeatedly chargeable and dischargeable may be classified into a cylindrical secondary battery, a prismatic secondary battery, a pouch-type secondary battery, or the like, depending on structures and manufacturing methods thereof. According to the related art, the cylindrical battery or the prismatic battery has been widely used in which metal cans are generally used as an exterior material for a secondary battery. However, the battery having this structure has a fixed shape and thus restricts the design of an electronic product that uses the battery as a power source, and it is also difficult to reduce the volume thereof. Thus, the development of the pouch-type secondary battery has been actively performed.

The pouch-type secondary battery generally has a structure in which an electrode assembly is accommodated in a sheet-shaped pouch film (or a pouch exterior material), and the electrode assembly has a structure in which electrodes and separators are alternately disposed. Specifically, a case is roughly divided into a lower case having a cup portion (or an accommodation portion) and an upper case covering the lower case, and the electrode assembly embedded in the cup portion is made by stacking positive electrodes, negative electrodes, and separators. An electrode tab is drawn from each of the electrodes, and tape is attached to a portion of the electrode tab that overlaps with a sealing portion.

The pouch-type secondary battery having this structure has a relatively easily deformable shape unlike the cylindrical battery, and the secondary battery may achieve the same capacity with smaller volume and mass. However, a pouch case made of a soft material is used as a container, and thus, mechanical strength becomes weak.

Particularly, the pouch case has the cup portion through forming of the sheet-type pouch film, and elongation occurs inevitably during the manufacturing process. When excessive elongation occurs, the pouch case is exposed to a risk of fine cracks or ruptures. Accordingly, when the cracks and ruptures occur at the pouch case that serves as an external material, an electrolyte leaks and reacts with oxygen. Thus, battery performance may deteriorate, and safety may not be guaranteed.

Therefore, according to the related art to solve the problems described above, a formed pouch case is sampled, and a portion, in which critical elongation is assumed to have occurred, is extracted to measure the thickness with a microscope, thereby measuring an elongation rate. Then, a defect of the portion is detected by checking whether the elongation having a level causing a risk of cracks or ruptures occurs or not.

However, in this method, arbitrary sampling is required to detect defects, and thus, there is a limitation in substantially detecting all defective pouch cases. Also, the sampling has to be performed separately for measurement, and thus, the rate and efficiency of detecting defects becomes remarkably lowered.

So, the method according to the related art could not sufficiently ensure safety of a battery, and an improvement is required because productivity of entire processes is low. That is, there is a need for developing a method for manufacturing a pouch case of a secondary battery, and a pouch film of a secondary battery and a pouch case of a secondary battery, which are capable of more easily identifying and detecting whether a crack or rupture due to elongation after forming of the pouch film occurs or not or whether the elongation has been reach a critical level in which the crack or rupture is about to occur.

### DISCLOSURE OF THE INVENTION

### TECHNICAL PROBLEM

The present invention has been made to solve the above problems, and an object of the present invention is to provide a method for manufacturing a pouch case of a secondary battery, and a pouch film of a secondary battery and a pouch case of a secondary battery. During a process of manufacturing a pouch case by forming a pouch film, an elongation rate can be measured by the color of an outer layer of the pouch film without separate sampling, and it can be determined whether or not elongation has occurred which causes a critical level in which a crack is about to occur or a defective level in which a crack is occurring.

### TECHNICAL SOLUTION

A method for manufacturing a pouch case of a secondary battery according to the present invention includes: stacking a metal layer above an inner layer and stacking an outer layer, which includes colored dye particles, above the metal layer, thereby producing a pouch film; forming the pouch film into a three-dimensional shape so that an electrode assembly is accommodated therein; and measuring an elongation rate of the pouch film through color of the outer layer.

The measuring of the elongation rate may include: extracting color data of the outer layer; inputting the color data into a data table in which colors and elongation rates correspond to each other; and outputting a value of the elongation rate of the pouch film that corresponds to the input color data.

The method may further include, after the measuring of the elongation rate, determining whether formation is defective, wherein in the determining of whether formation is defective, the pouch film is determined to be defective when the elongation rate thereof is 40% or higher.

The method may further include, prior to the producing of the pouch film, manufacturing the outer layer, wherein in the manufacturing of the outer layer, the outer layer is formed by stacking polyethylene terephthalate, which includes colored dye, above nylon.

In the manufacturing of the outer layer, the outer layer may be manufactured to a thickness of 12 µm to 30 µm.

In the producing of the pouch film, the inner layer may be made of polypropylene.

In the producing of the pouch film, the metal layer may be made of aluminum.

A pouch film of a secondary battery according to the present invention includes: an inner layer; a metal layer stacked above the inner layer; and an outer layer which is stacked above the metal layer and in which colored dye particles are mixed.

When the pouch film is formed, the outer layer enables measurement of an elongation rate through the color of the outer layer.

When the pouch film is formed, the outer layer may be determined to reach critical elongation in case the color becomes brighter than reference color.

The reference color may indicate the color of the outer layer when the elongation rate reaches 40%.

The outer layer may be formed by stacking polyethylene terephthalate above nylon, and the colored dye particles may be provided in the polyethylene terephthalate.

The metal layer may be made of aluminum, and the inner layer may be made of polypropylene.

A pouch case of a secondary battery according to the present invention includes: a lower case in which a cup portion having a recessed shape is formed; and an upper case configured to cover an upper portion of the lower case from above, wherein the lower case and the upper case are manufactured by forming a pouch film, wherein the pouch film includes: an inner layer; a metal layer stacked above the inner layer; and an outer layer which is stacked above the metal layer and in which colored dye or pigment particles are provided.

The cup portion may be formed to have one bottom surface and four side surfaces, wherein the bottom surface and the side surfaces are formed such that an edge region and a central region of each of the surfaces have different colors.

The bottom surface and the side surfaces may be formed such that the edge region of each of the surfaces is brighter than the central region thereof.

The bottom surface and the side surfaces may be formed such that the edge region of each of the surfaces has a lower concentration distribution of the colored dye or pigment than that of the central region thereof.

### ADVANTAGEOUS EFFECTS

A method for manufacturing a pouch case of a secondary battery according to the present invention includes: stacking a metal layer above an inner layer and stacking an outer layer, which includes colored dye particles, above the metal layer, thereby producing a pouch film; forming the pouch film into a three-dimensional shape so that an electrode assembly is accommodated therein; and measuring an elongation rate of the pouch film through color of the outer layer. Accordingly, during a process of manufacturing a pouch case by forming the pouch film, the elongation rate can be measured by the color of an outer layer of the pouch film without separate sampling, and it can be determined whether or not elongation has occurred which causes a critical level in which a crack is about to occur or a defective level in which a crack is occurring.

### BRIEF DESCRIPTION OF THE DRAWINGS

FIG. 1 is a perspective view illustrating a general pouch case of a secondary battery.
FIG. 2 is a flowchart illustrating a method for manufacturing a pouch case of a secondary battery according to Embodiment 1 of the present invention.
FIG. 3 is a cross-sectional view illustrating a cross-section of a pouch film according to Embodiments 1 and 2 of the present invention before elongation occurs.
FIG. 4 is a cross-sectional view illustrating a cross-section of the pouch film according to Embodiments 1 and 2 of the present invention after elongation occurs.
FIG. 5 is a perspective view illustrating a pouch case of a secondary battery according to Embodiment 3 of the present invention.

### MODE FOR CARRYING OUT THE INVENTION

Hereinafter, preferred embodiments of the present invention will be described in detail with reference to the accompanying drawings so as to be easily carried out by a person skilled in the art to which the present invention pertains. However, the present invention may be embodied in various different forms, and is neither limited nor restricted to the following embodiments.

In order to clearly describe the present invention, parts irrelevant to the description are omitted, and descriptions related to well-known functions or configurations are ruled out so as not to unnecessarily obscure subject matters of the present invention. In the specification, when reference numerals are given to components in each of the drawings, the same or similar components will be designated by the same or similar reference numerals throughout the specification.

Also, terms or words used in this specification and claims should not be restrictively interpreted as ordinary meanings or dictionary-based meanings, but should be interpreted as meanings and concepts conforming to the technical ideas of the present invention on the basis of the principle that an inventor can properly define the concept of a term to describe his or her invention in the best ways.

### Embodiment 1

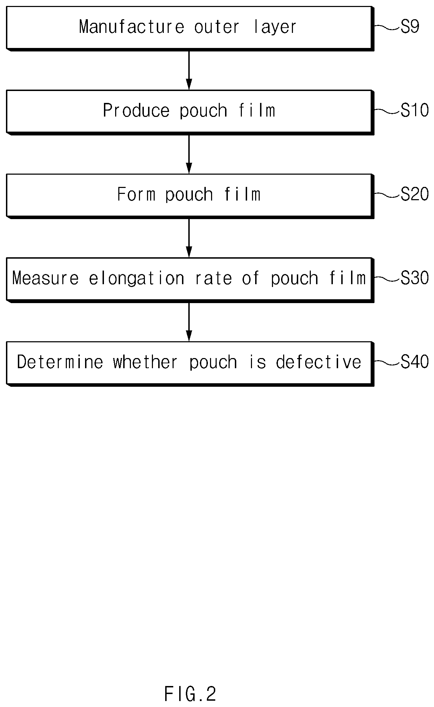

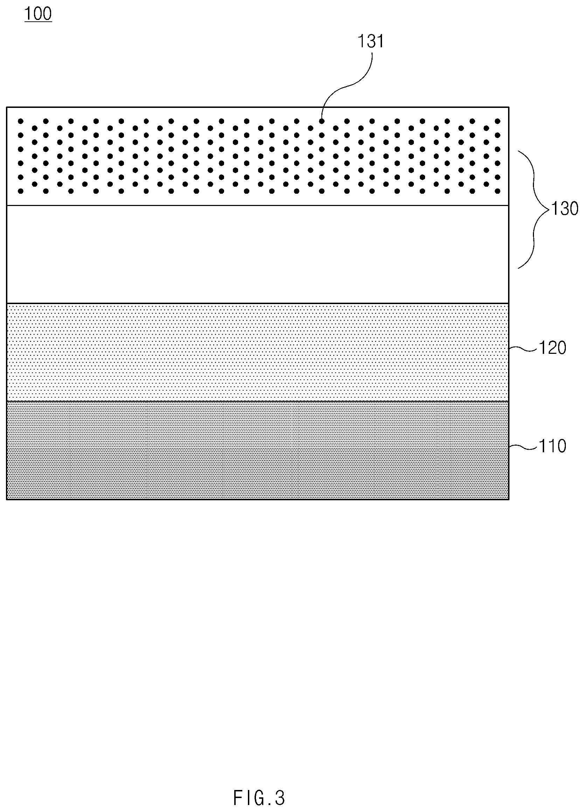

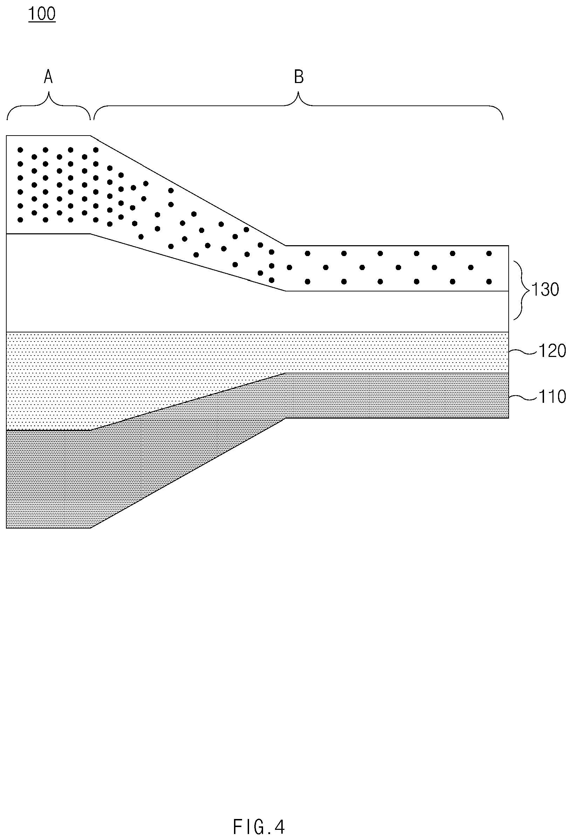

FIG. 2 is a flowchart illustrating a method for manufacturing a pouch case of a secondary battery according to Embodiment 1 of the present invention. FIG. 3 is a cross-sectional view illustrating a cross-section of the pouch film according to Embodiment 1 of the present invention before elongation occurs. FIG. 4 is a cross-sectional view illustrating a cross-section of the pouch film according to Embodiment 1 of the present invention after elongation occurs.

Referring to FIG. 2, a method for manufacturing a pouch case of a secondary battery according to Embodiment 1 of the present invention includes an operation (S10) of producing a pouch film, an operation (S20) of forming the pouch film, and an operation (S30) of measuring an elongation rate of the pouch film.

First, describing in detail the operation (S10) of producing a pouch film, a pouch film 100 is formed in a multi-layer structure in which a plurality of layers are stacked as illustrated in FIG. 3. A metal layer 120 is stacked above an inner layer 110, and an outer layer 130 is stacked above the metal layer 120.

The inner layer 110 is a layer positioned on the innermost side of the pouch film 100, and serves as a sealing material having the chemical resistance to an electrolyte and the thermal adhesion property, and is made of mainly polyolefin-based resin and preferably may be made of polypropylene (PP). The metal layer 120 is a layer interposed between the inner layer 110 and the outer layer 130, maintains the mechanical strength of the pouch film 100, and serves as a barrier to moisture and oxygen. The metal layer 120 may be made of an alloy of iron (Fe), carbon (C), chromium (Cr), and manganese (Mn), or an alloy of iron (Fe), carbon (C), chromium (Cr), and nickel (Ni), or the like, and preferably may be made of aluminum (Al). The outer layer 130 is a layer formed on the outermost side of the pouch film 100, serves to protect the battery from external impact, and is required to have insulating properties and thermal resistance properties because coming into direct contact with hardware. The material properties of the outer layer 130 and a manufacturing method therefor will be described in detail below.

The method for manufacturing a pouch case of a secondary battery according to Embodiment 1 of the present invention may include an operation (S9) of manufacturing the outer layer, prior to the operation (S10) of producing the pouch film. The material of the outer layer 130 may include a single layer having one selected from polyethylene (PE), polypropylene (PP), polyethylene terephthalate (PET), nylon, low density polyethylene (LDPE), and high density polyethylene (HDPE), or a composite layer having two or more selected therefrom. In the operation (S9) of manufacturing the outer layer according to Embodiment 1 of the present invention, the outer layer 130 may be formed by stacking a polyethylene terephthalate (PET), in which colored dye is included, above a nylon film having a transparent material.

Here, the dye includes organic dye or inorganic dye and is not specifically limited, and anything can be used as long as it can be included, as colored dye, in the outer layer. Preferably, anything can be used without limitation as long as it can be mixed in or attached to the polyethylene terephthalate (PET). Also, not only dye but also pigment may be used.

The total thickness of the pouch film 100 may be typically 40 to 120 µm. The inner layer 110 may have a thickness of 10 to 40 µm and the metal layer 120 may have a thickness of 20 to 100 µm. Preferably, the outer layer 130 may be manufactured to a thickness of 12 µm to 30 µm.

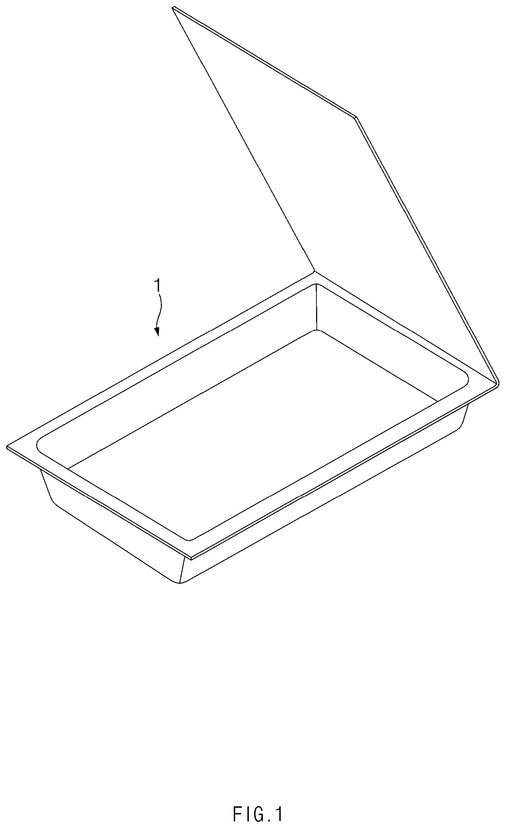

After the pouch film is produced (S10), the pouch film may be formed into a three-dimensional shape (S20) so that an electrode assembly can be accommodated in the pouch film 100. The pouch-type secondary battery may be mainly divided into a pouch case 1 and an electrode assembly accommodated in the pouch case 1. The pouch case 1 is divided into a lower case and an upper case for covering the lower case as illustrated in FIG. 1, and the lower case has a cup portion formed so as to accommodate the electrode assembly. The pouch film 100 stacked in a multi-layer structure is subjected to a process in which a cup portion is formed by a forming apparatus. After regions other than a cup portion of the pouch film 100 are fixed, the cup portion is pressed by a press punch. As the pouch film 100 elongates, the pouch case 1 is formed that has the cup portion having a shape corresponding to the punch. In this case, the elongation occurs mainly at an edge portion of the pouch case 1 including a rim of the cup portion of the pouch case 1, and a crack or rupture occurs mainly therein.

The method for manufacturing a pouch case of a secondary battery according to Embodiment 1 of the present invention may measure (S30) an elongation rate of the pouch film 100 through the color of the outer layer 130 of the pouch film 100. The measurement (S30) of the elongation rate of the pouch film 100 through the color will be described in detail below with reference to FIG. 4.

As described above, the outer layer 130 is formed by stacking the polyethylene terephthalate, in which colored dye particles 131 are included, above the transparent nylon. Before the elongation occurs, the pouch film 100 has a color concentration of the dye particles 131 of the outer layer 130 when viewed from the outside. However, when the elongation occurs due to the forming of the pouch film 100, the concentration of the dye particles 131 in a section B, in which the elongation occurs, becomes lower than that in a section A in which the elongation does not occur as illustrated in FIG. 4. As a result, the color concentration of the outer layer 130 in the section B, in which the elongation occurs, becomes lighter and is mixed with the color of the metal layer 120 stacked below the outer layer 130. Thus, the color of the pouch film 100 in the elongation occurrence section B changes. Particularly, when the metal layer 120 is made of aluminum (Al) having a bright color, the color of the colored dye particles 131 becomes lighter and is mixed with the bright color of the aluminum (Al) as the elongation occurs. The pouch film 100 in the section B, in which the elongation occurs, is converted into a brighter color than that in the section A in which the elongation does not occur. Accordingly, the elongation rate may be measured (S30) through the color of the outer layer 130 of the pouch film 100.

The method for manufacturing a pouch case of a secondary battery according to Embodiment 1 of the present invention may measure the elongation rate through the color of the outer layer 130 of the pouch film 100 without separate sampling, and may determine whether or not elongation has occurred which causes a critical level in which a crack is about to occur or a defective level in which a crack is occurring. Also, objects to be inspected for defects and rates to determine defects are made to increase, and times and costs consumed during relevant processes may be made to significantly decrease. Thus, the productivity may be enhanced, and quality and price competitiveness of products may be secured.

Next, the operation (S30) of measuring the elongation rate will be described in detail. The operation (S30) of measuring the elongation rate may include an operation of extracting color data of the outer layer 130, an operation of inputting the color data into a data table in which colors and elongation rates correspond to each other, and an operation of outputting a value of the elongation rate of the pouch film that corresponds to the input color data.

First, when examining the operation of extracting the color data of the outer layer 130, the color of the outer layer 130 may be extracted by an input means and a processor. For example, the color of the outer layer 130 of the pouch film 100 is recognized through an input means such as a camera module including a lens and an image or color detection sensor, and then, the color is identified by a processor operatively coupled to the sensor. Consequently, the color is extracted as data.

Subsequently, the extracted color data is input into a data table in which colors and elongation rates have been stored and corresponded to each other. Here, the data table having the colors and elongation rates corresponding to each other represents a table in which changes in color of the pouch film 100 according to levels of occurrence of elongation are made into data and stored on the basis of the initial color of the pouch film 100 in which the colored dye particles 131 having a pre-set concentration are included in the outer layer 130. For example, in the table, the concentration ratio of specific colored dye contained in the PET layer is set, and the pouch film 100 including the outer layer 130 produced according to the set value is elongated. Then, changes in color for each of sections of elongation rates are made into data, and the colors of the pouch film 100 and elongation rates are made to correspond to each other.

When the extracted color data is input into the data table, the stored color data relevant to the input color data is selected, and the elongation rate value of the pouch film 100 corresponding thereto is outputted. Thus, when compared to the method according to the related art of sampling a pouch case, extracting a portion in which elongation occurs, and then identifying the thickness with a microscope, the elongation rate may be measured only with the color data by using the stored data table. Thus, the time consumed in the defect detection operation may be dramatically reduced, and the elongation rate may be measured only with vision inspection without separate sampling. Therefore, the defect detection work for all pouch cases being formed may be easily performed.

The method further includes, after the operation (S30) of measuring the elongation rate of the pouch film, an operation (S40) of determining whether formation is defective. In the operation (S40) of determining whether formation is defective, the pouch film 100 may be determined to be defective when the elongation rate thereof is 40% or higher. Referring to this, for the pouch film 100 in which the metal layer 120 is made of aluminum, there is a remarkably high possibility that crack or rupture occurs when the elongation of 40% occurs. This is regarded as elongation causing a critical level and thus determined to be defective. So, the pouch case having a risk of the occurrence is removed in advance even though the crack or rupture does not occur, and thus, the safety of the battery may be ensured, and the time consumed in defect determination may be remarkably reduced.

### Embodiment 2

FIG. 3 is a cross-sectional view illustrating a cross-section of a pouch film according to Embodiment 2 of the present invention before elongation occurs. FIG. 4 is a cross-sectional view illustrating a cross-section of the pouch film according to Embodiment 2 of the present invention after elongation occurs.

Embodiment 2 of the present invention is different from Embodiment 1 in that the invention relates to a pouch film 100 which is used in the method for manufacturing a pouch case of a secondary battery of Embodiment 1.

Embodiment 2 will be described with a focus on the differences, and the features common to Embodiment 1 will be omitted as much as possible. That is, it is obvious that features not described in Embodiment 2 may be regarded as the features of Embodiment 1 if necessary.

Referring to FIG. 3, a pouch film 100 of a secondary battery according to Embodiment 2 of the present invention includes an inner layer 110, a metal layer 120, and an outer layer 130.

The metal layer 120 is stacked above the inner layer 110, and the outer layer 130, in which colored dye particles 131 are mixed, is formed above the metal layer 120. Consequently, the pouch film 100 is constituted. The metal layer 120 may be made of aluminum (AL), and the inner layer 110 may be made of polypropylene (PP). The outer layer 130 may be formed by stacking polyethylene terephthalate (PET) above nylon, and the colored dye particles 131 may be included in the polyethylene terephthalate PET.

Particularly, the outer layer 130 may be produced such that the elongation rate can be measured through the color of the outer layer 130 when the pouch film 100 is formed. Specifically, when the pouch film 100 is formed, it may be determined that elongation reaches critical elongation in case the color becomes brighter than reference color. The reference color may indicate, for example, the color of the outer layer 130 when the elongation rate reaches 40%.

The pouch film 100 according to Embodiment 2 of the present invention may measure the elongation rate through the color of the outer layer 130 of the pouch film 100 without separate sampling, and may determine whether or not elongation has occurred which causes a critical level in which a crack is about to occur or a defective level in which a crack is occurring.

### Embodiment 3

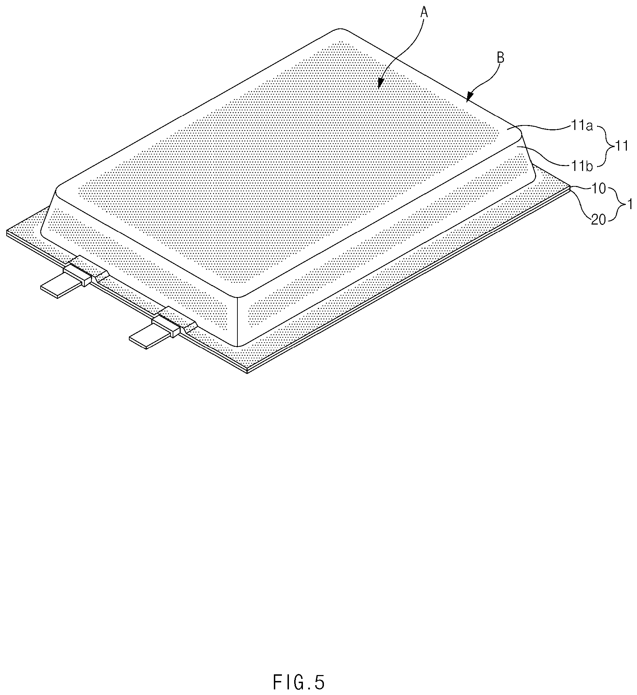

FIG. 5 is a perspective view illustrating a pouch case of a secondary battery according to Embodiment 3 of the present invention.

Embodiment 3 of the present invention is different from Embodiment 1 in that the invention relates to a pouch case of a secondary battery which is manufactured by the method for manufacturing a pouch case of a secondary battery of Embodiment 1 and the pouch film of Embodiment 2.

Embodiment 3 will be described with a focus on the differences, and the features common to Embodiment 1 and Embodiment 2 will be omitted as much as possible. That is, it is obvious that features not described in Embodiment 3 may be regarded as the features of Embodiment 1 and Embodiment 2 if necessary.

Referring to FIG. 5, a pouch case 1 of a secondary battery according to Embodiment 3 of the present invention includes a lower case 10, in which a cup portion 11 having a recessed shape is formed, and an upper case 20, which covers an upper portion of the lower case 10 from above. The lower case 10 and the upper case 20 are manufactured by forming a pouch film. Also, the pouch film is constituted by an inner layer, a metal layer stacked above the inner layer, and an outer layer stacked above the metal layer and including colored dye or pigment particles. Here, the pouch film may represent the pouch film of Embodiment 2 described above, and the inner layer, the metal layer, and the outer layer may be understood as being identical to those of the Embodiment 2.

Thus, with respect to the pouch case 1 according to Embodiment 3 of the present invention, a change in color may be observed through vision inspection when the pouch case 1 is elongated and formed. A section of elongation and a degree of elongation are checked, and thus, it may be easily identified whether or not elongation has occurred which causes a critical level or a defective level in which a crack is occurring.

Here, the recessed shape of the cup portion 11 represents a recessed shape when viewed in a direction from the upper case 20 to the lower case 10, and may represent a shape that protrudes outward when viewed in a direction opposite to the recessed direction.

Meanwhile, the cup portion 11 may be formed to have one bottom surface 11a and four side surfaces 11b, and the bottom surface 11a and the side surfaces 11b may be formed such that an edge region and a central region of each of the surfaces have different colors. That is, the edge region may be a section B in which elongation occurs, and the central region may be a section A in which the elongation does not occur. As described above, in the pouch case 1 according to the present invention, the exterior color of the edge region in which the elongation mainly occurs is checked, and the degree of elongation may be identified. Meanwhile, the colors of the edge region and the central region are not clearly distinguished by a boundary at a specific location. The color may become lighter or darker gradually from the edge region toward the central region.

Also, the bottom surface 11a and the side surfaces 11b may be formed such that the edge region of each of the surfaces may be brighter than the central region. This indicates that when the metal layer is made of aluminum having a bright color, the color of the colored dye particles becomes lighter and is mixed with the bright color of the aluminum as the elongation occurs. The edge region of each surface, which is the section in which the elongation occurs, is formed to have a brighter color than the central region which is the section in which the elongation does not occur.

However, this is not necessarily limited thereto, and the edge region of each surface may have a darker color than the central region as necessary. That is, the bottom surface 11a and the side surfaces 11b may be formed such that the edge region of each of the surfaces has a lower concentration distribution of the colored dye or pigment than that of the central region thereof. The relative brightness and darkness in the edge region and the central region of the pouch case 1 may change according to the color of the metal layer of the pouch film and the color of the colored dye.

Although the present invention is described by specific embodiments and drawings, the present invention is not limited thereto, and various changes and modifications may be made by a person skilled in the art to which the present invention pertains within the technical idea of the present invention and equivalent scope of the appended claims.

### [Description of the Symbols]

1: Pouch case
10: Lower case
20: Upper case
11: Cup portion
11a: Bottom surface
11b: Side surface
100: Pouch film
110: Inner layer
120: Metal layer
130: Outer layer
131: Dye particle
A: Section in which elongation does not occur
B: Section in which elongation occurs
S9: Manufacture outer layer
S10: Produce pouch film
S20: Form pouch film
S30: Measure elongation rate of pouch film
S40: Determine whether pouch is defective

Preferred embodiments of the Invention are specified in the following items:
Item 1. A method for manufacturing a pouch case of a secondary battery, the method comprising:
   stacking a metal layer above an inner layer and stacking an outer layer, which comprises colored dye particles, above the metal layer, thereby producing a pouch film;
   forming the pouch film into a three-dimensional shape so that an electrode assembly is accommodated therein; and
   measuring an elongation rate of the pouch film through color of the outer layer.
Item 2. The method of item 1, wherein the measuring of the elongation rate comprises:
   extracting color data of the outer layer;
   inputting the color data into a data table in which colors and elongation rates correspond to each other; and
   outputting a value of the elongation rate of the pouch film that corresponds to the input color data.
Item 3. The method of item 1, further comprising, after the measuring of the elongation rate,
   determining whether formation is defective,
   wherein in the determining of whether formation is defective, the pouch film is determined to be defective when the elongation rate thereof is 40% or higher.
Item 4. The method of item 1, further comprising, prior to the producing of the pouch film,
   manufacturing the outer layer,
   wherein in the manufacturing of the outer layer, the outer layer is formed by stacking polyethylene terephthalate, which comprises colored dye, above nylon.
Item 5. The method of item 4, wherein in the manufacturing of the outer layer, the outer layer is manufactured to a thickness of 12 µm to 30 µm.
Item 6. The method of item 1, wherein in the producing of the pouch film, the inner layer is made of polypropylene.
Item 7. The method of item 1, wherein in the producing of the pouch film, the metal layer is made of aluminum.
Item 8. A pouch film of a secondary battery, the pouch film comprising:
   an inner layer;
   a metal layer stacked above the inner layer; and
   an outer layer which is stacked above the metal layer and in which colored dye particles are mixed.
Item 9. The pouch film of item 8, wherein when the pouch film is formed, the outer layer enables measurement of an elongation rate through the color of the outer layer.
Item 10. The pouch film of item 8, wherein when the pouch film is formed, the outer layer is determined to reach critical elongation in case the color becomes brighter than reference color.
Item 11. The pouch film of item 10, wherein the reference color indicates the color of the outer layer when the elongation rate reaches 40%.
Item 12. The pouch film of item 8, wherein the outer layer is formed by stacking polyethylene terephthalate above nylon, and the colored dye particles are provided in the polyethylene terephthalate.
Item 13. The pouch film of item 8, wherein the metal layer is made of aluminum, and the inner layer is made of polypropylene.
Item 14. A pouch case of a secondary battery, the pouch case comprising:
   a lower case in which a cup portion having a recessed shape is formed; and
   an upper case configured to cover an upper portion of the lower case from above,
   wherein the lower case and the upper case are manufactured by forming a pouch film,
   wherein the pouch film comprises:
      an inner layer;
      a metal layer stacked above the inner layer; and
      an outer layer which is stacked above the metal layer and in which colored dye or pigment particles are provided.
Item 15. The pouch case of item 14, wherein the cup portion is formed to have one bottom surface and four side surfaces,
   wherein the bottom surface and the side surfaces are formed such that an edge region and a central region of each of the surfaces have different colors.
Item 16. The pouch case of item 15, wherein the bottom surface and the side surfaces are formed such that the edge region of each of the surfaces is brighter than the central region thereof.
Item 17. The pouch case of item 15, wherein the bottom surface and the side surfaces are formed such that the edge region of each of the surfaces has a lower concentration distribution of the colored dye or pigment than that of the central region thereof.

## Claims

1. A pouch film of a secondary battery, the pouch film comprising:
an inner layer;
a metal layer stacked above the inner layer; and
an outer layer which is stacked above the metal layer and in which colored dye particles are mixed,
wherein, when forming of the pouch film,
the concentration of the dye particles in a section B, in which the elongation occurs, becomes lower than that in a section A in which the elongation does not occur,
as a result, the color concentration of the outer layer in the section B, in which the elongation occurs, becomes lighter and is mixed with the color of the metal layer stacked below the outer layer,
thus, the color of the outer layer in the elongation occurrence section B changes.

2. The pouch film of claim 1, wherein when the pouch film is formed, the outer layer enables measurement of an elongation rate through the color of the outer layer.

3. The pouch film of claim 1 or 2, wherein when the pouch film is formed, the outer layer is determined to reach critical elongation in case the color becomes brighter than reference color.

4. The pouch film of claim 3, wherein the reference color indicates the color of the outer layer when the elongation rate reaches 40%.

5. The pouch film of any one of claims 1 to 4, wherein the outer layer is formed by stacking polyethylene terephthalate above nylon, and the colored dye particles are provided in the polyethylene terephthalate.

6. The pouch film of any one of claims 1 to 5, wherein the metal layer is made of aluminum, and the inner layer is made of polypropylene.

7. A pouch case of a secondary battery, the pouch case comprising:
a lower case in which a cup portion having a recessed shape is formed; and
an upper case configured to cover an upper portion of the lower case from above,
wherein the lower case and the upper case are manufactured by forming a pouch film,
wherein the pouch film comprises:
an inner layer;
a metal layer stacked above the inner layer; and
an outer layer which is stacked above the metal layer and in which colored dye or pigment particles are provided,
wherein, when forming of the pouch film,
the concentration of the dye particles in a section B, in which the elongation occurs, becomes lower than that in a section A in which the elongation does not occur,
as a result, the color concentration of the outer layer in the section B, in which the elongation occurs, becomes lighter and is mixed with the color of the metal layer stacked below the outer layer,
thus, the color of the outer layer in the elongation occurrence section B changes.

8. The pouch case of claim 7, wherein the cup portion is formed to have one bottom surface and four side surfaces,
wherein the bottom surface and the side surfaces are formed such that an edge region and a central region of each of the surfaces have different colors.

9. The pouch case of claim 8, wherein the bottom surface and the side surfaces are formed such that the edge region of each of the surfaces is brighter than the central region thereof.

10. The pouch case of claim 8 or 9, wherein the bottom surface and the side surfaces are formed such that the edge region of each of the surfaces has a lower concentration distribution of the colored dye or pigment than that of the central region thereof.
